# EUROPÄISCHE PATENTSCHRIFT

(11) **EP 3 538 453 B1**
(45) Veröffentlichungstag und Bekanntmachung des Hinweises auf die Patenterteilung: **01.01.2020**
(21) Anmeldenummer: 17788112.5
(22) Anmeldetag: 19.10.2017
(51) Int. Cl.: B65D 85/68, B60P 3/073

(54) **SYSTEM ZUM TRANSPORTIEREN MEHRERER KAROSSERIEN**
SYSTEM FOR TRANSPORTING MULTIPLE BODIES
SYSTÈME DE TRANSPORT D'UNE PLURALITÉ DE CARROSSERIES

(30) Priorität: 11.11.2016 DE 102016013482
(43) Veröffentlichungstag der Anmeldung: 18.09.2019
(73) Patentinhaber: Audi AG, 85045 Ingolstadt (DE)
(72) Erfinder: ZACHERL, Franz, 85092 Kösching (DE)
(86) Internationale Anmeldenummer: PCT/EP2017/001228
(87) Internationale Veröffentlichungsnummer: WO 2018/086725

(56) Entgegenhaltungen:
- EP-A1- 1 676 792
- EP-A2- 2 402 266
- WO-A1-2006/013655
- GB-A- 2 434 357
- JP-A- 2015 214 377
- JP-U- S4 838 560

## Beschreibung

Die Erfindung betrifft ein System zum Transportieren mehrerer Karosserien und ein Verfahren zum Transportieren mehrerer Karosserien.

Ein Kraftfahrzeug wird in der Regel an einem Standort aus seinen einzelnen Komponenten zusammengebaut. Dabei ist es möglich, dass einzelne dieser Komponenten an anderen Standorten vorproduziert wurden und demnach zu jenem Standort zu transportieren sind, an dem das Kraftfahrzeug zusammengebaut wird. Diesbezüglich ist es auch möglich, dass eine Karosserie als Komponente des Kraftfahrzeugs an einem ersten Standort produziert und zum Zusammenbau zu einem zweiten Standort transportiert wird.

Ein Transportfahrzeug für Personenkraftwagen ist in der Druckschrift DE 24 56 292 A1 beschrieben. Hierbei ist u. a. vorgesehen, die Personenkraftwagen auf dem Transportfahrzeug übereinander anzuordnen. Aus der Druckschrift US 7 575 402 B2 ist ebenfalls ein Transportfahrzeug für Personenkraftwagen bekannt. Dabei ist vorgesehen, die Kraftfahrzeuge auf Aktuatoren anzuordnen, die in ihrer Länge verstellbar sind.

Aus der Druckschrift WO 94/18421 A1 ist bekannt, ein Kraftfahrzeug zu einem Transport auf einem Sattelauflieger auf einem Lift mit einer vorderen und einer hinteren Liftanordnung anzuordnen, wobei diese Liftanordnungen unterschiedlich hoch eingestellt werden können. Aus der Druckschrift EP2402266A2 ist ein System gemäß dem Oberbegriff des Anspruchs 1 und ein Verfahren gemäß dem Oberbegriff des Anspruchs 8 bekannt.

Vor diesem Hintergrund war es eine Aufgabe, Karosserien für Kraftfahrzeuge möglichst platzsparend in einem Container zu transportieren.

Diese Aufgabe wird mit einem System und einem Verfahren mit den Merkmalen der unabhängigen Patentansprüche gelöst. Ausführungsformen des Systems und des Verfahrens gehen aus den abhängigen Patentansprüchen und der Beschreibung hervor.

Das erfindungsgemäße System ist zum Transportieren mehrerer Karosserien für mehrere Kraftfahrzeuge in einem Container vorgesehen, wobei das System den Container umfasst und dieser einen quaderförmigen Innenraum mit einer Deckenhöhe d und eine Türöffnung mit einer Türhöhe t, die mit mindestens einer Tür bzw. mindestens einem Türblatt verschließbar ist, aufweist, wobei die Türhöhe t geringer als die Deckenhöhe d ist. Das System weist für jede zu transportierende bzw. transportierbare Karosserie ein Transportgestell auf, wobei jedes Transportgestell einen Grundrahmen, eine erste, vordere Abstützeinrichtung und eine zweite, hintere Abstützeinrichtung aufweist. Dabei ist eine Länge mindestens einer Abstützeinrichtung eines jeweiligen Transportgestells veränderbar. Jede in dem Container zu transportierende Karosserie ist auf jeweils einem Transportgestell anzuordnen bzw. anordenbar, wobei eine maximale Höhe des Transportgestells mit der darauf angeordneten Karosserie zunächst auf einen Wert bzw. eine Verladehöhe, der bzw. die geringer als die Türhöhe t ist, einzustellen bzw. einstellbar ist. Das Transportgestell mit der darauf angeordneten Karosserie ist durch die Türöffnung zu führen bzw. führbar und in dem Innenraum des Containers anzuordnen. Weiterhin ist die maximale Höhe mindestens eines Transportgestells mit der darauf angeordneten Karosserie durch Verlängern der mindestens einen Abstützeinrichtung auf einen Wert bzw. eine Versandhöhe einzustellen, der bzw. die größer als die Türhöhe t, aber maximal so groß wie die Deckenhöhe d ist. Das Transportgestell kann als Karosserierack bezeichnet werden und/oder als solches ausgebildet sein.

In Ausgestaltung ist lediglich die Länge einer der beiden Abstützeinrichtungen, in der Regel der ersten Abstützeinrichtung, veränderbar, wohingegen die Länge der anderen der beiden Abstützeinrichtungen, in der Regel der zweiten Abstützeinrichtung konstant ist.

Es ist jedoch auch möglich, dass die Längen beider Abstützeinrichtungen veränderbar sind. In diesem Fall kann jedoch vorgesehen sein, dass je nach Bedarf nur die Länge einer Abstützeinrichtung auf den Wert einzustellen ist, der größer als die Türhöhe t ist, nachdem das Türgestell bzw. Karosserierack durch die Türöffnung in dem Innenraum angeordnet worden ist.

In der Regel können die Abstützeinrichtungen unterschiedlich lang sein bzw. unterschiedlich lang eingestellt sein, wenn die Karosserie darauf angeordnet wird. Weiterhin ist eine Länge einer längeren Abstützeinrichtung zu verlängern bzw. verlängerbar, nachdem das Transportgestell mit der darauf angeordneten Karosserie in dem Innenraum angeordnet worden ist. Entsprechend ist eine Länge einer kürzeren Abstützeinrichtung ggf. zu verkürzen, nachdem das Transportgestell mit der darauf angeordneten Karosserie in dem Innenraum angeordnet worden ist.

Dabei kann vorgesehen sein, dass die erste Abstützeinrichtung länger als die zweite Abstützeinrichtung ist. Durch Variation und/oder Einstellen der Länge der mindestens einen Abstützeinrichtung ist es u. a. möglich, dass die Karosserie in dem Innenraum des Containers eine maximal mögliche Schrägstellung aufweist. Eine maximal einstellbare Länge bzw. Höhe der mindestens einen Abstützeinrichtung ist unter Berücksichtigung einer Abmessung der auf dem Transportgestell angeordneten Karosserie durch die Deckenhöhe d begrenzt, wobei die Länge jeweils manuell und individuell eingestellt werden kann.

Außerdem weist jede Abstützeinrichtung eine Halteeinrichtung auf, auf der die Karosserie anordenbar ist, wobei bei Verändern der Länge der mindestens einen Abstützeinrichtung ein Abstand einer Halteeinrichtung mindestens einer Abstützeinrichtung zu dem Grundrahmen hinsichtlich seiner Höhe einstellbar ist.

In Ausgestaltung ist die Karosserie auf einer ersten Halteeinrichtung auflegbar. Weiterhin ist die Karosserie an einer zweiten Halteeinrichtung befestigbar, bspw. damit verschraubbar. Beim Verändern der Länge der mindestens einen Abstützeinrichtung kann die auf der ersten Halteeinrichtung aufgelegte und/oder angeordnete Karosserie auf dieser ersten Halteeinrichtung gleiten. Sobald die Karosserie auf dem Transportgestell eine für den Transport vorgesehene Stellung aufweist, kann sie auch an der ersten Halteeinrichtung befestigt werden.

Die mindestens eine Abstützeinrichtung kann bspw. eine Spindel aufweisen, mit der deren Länge veränderbar ist.

Die maximale Höhe des Transportgestells mit der darauf angeordneten Karosserie entspricht zunächst der Verladehöhe, die geringer als die Türhöhe t ist, um das Transportgestell mit der Karosserie in dem Container zu verladen, und wird dann auf eine Versandhöhe eingestellt, die größer als die Türhöhe t und geringer als die Deckenhöhe d für den Transport bzw. Versand im Container vorgesehen ist.

Das erfindungsgemäße Verfahren ist zum Transportieren bzw. Versenden mehrerer Karosserien für mehrere Kraftfahrzeuge in einem Container vorgesehen, wobei der Container einen quaderförmigen Innenraum mit einer Deckenhöhe d und eine Türöffnung mit einer Türhöhe t, die mit mindestens einer Tür verschließbar ist, aufweist, wobei die Türhöhe t geringer als die Deckenhöhe d ist. Für jede zu transportierende Karosserie wird ein Karosserierack als Transportgestell verwendet, wobei jedes Transportgestell einen Grundrahmen, eine erste, vordere Abstützeinrichtung und eine zweite, hintere Abstützeinrichtung aufweist, wobei eine Länge mindestens einer Abstützeinrichtung veränderbar ist. Jede zu transportierende bzw. transportierbare Karosserie wird auf jeweils einem Transportgestell angeordnet, wobei eine maximale Höhe des Transportgestells mit der darauf angeordneten Karosserie zunächst auf einen Wert bzw. eine Verladehöhe, der bzw. die geringer als die Türhöhe t ist, eingestellt wird, wobei das Transportgestell mit der darauf angeordneten Karosserie beim Verladen in den Container durch die Türöffnung geführt und in dem Innenraum des Containers angeordnet wird. Die maximale Höhe mindestens eines Transportgestells mit der darauf angeordneten Karosserie wird durch Verlängern der mindestens einen Abstützeinrichtung auf einen Wert eingestellt, der bzw. die größer als die Türhöhe t, aber maximal so groß wie die Deckenhöhe d ist und üblicherweise einer Transporthöhe bzw. Versandhöhe entspricht und/oder als eine solche bezeichnet werden kann.

In Ausgestaltung werden mehrere Transportgestelle mit darauf angeordneten Karosserien hintereinander in dem Container angeordnet, wobei mindestens eine Karosserie zumindest teilweise oberhalb einer anderen Karosserie angeordnet wird.

Jede Karosserie umfasst jeweils einen als Bug ausgebildeten und/oder bezeichenbaren vorderen Endbereich und einen als Heck ausgebildeten und/oder bezeichenbaren hinteren Endbereich, wobei jeder dieser beiden Endbereiche eine vertikale Höhe aufweist. Dabei wird jener Endbereich, der eine geringere vertikale Höhe aufweist, auf einer längeren der beiden Abstützeinrichtungen und jener Endbereich, der eine größere vertikale Höhe aufweist, auf einer kürzeren der beiden Abstützeinrichtungen angeordnet.

In Ausgestaltung ist vorgesehen, dass n Transportgestelle mit darauf angeordneten Karosserien mit dem Container zu transportieren sind. Dabei werden zunächst n-1 Transportgestelle mit n-1 darauf angeordneten Karosserien nacheinander in dem Innenraum angeordnet, wobei jede dieser n-1 Karosserien mit ihrem Endbereich, der die größere vertikale Höhe aufweist, voran in dem Innenraum angeordnet wird. Außerdem wird die maximale Höhe jedes dieser n-1 Transportgestelle mit der darauf angeordneten Karosserie durch Verlängern der mindestens einen Abstützeinrichtung auf den Wert eingestellt, der größer als die Türhöhe t, aber maximal so groß wie die Deckenhöhe d ist. Danach wird ein n-tes Transportgestell mit einer n-ten darauf angeordneten Karosserie in dem Innenraum angeordnet, wobei die n-te Karosserie mit ihrem Endbereich, der die geringere vertikale Höhe aufweist, voran in dem Innenraum angeordnet wird.

In weiterer Ausgestaltung des Verfahrens sind insgesamt n Transportgestelle mit darauf angeordneten Karosserien mit dem Container zu transportieren, wobei zunächst n-1 Transportgestelle mit n-1 darauf angeordneten Karosserien nacheinander in dem Innenraum angeordnet werden.

In Ausgestaltung wird geprüft, ob die Karosserien im Bereich des Hecks oder des Bugs eine minimale vertikale Höhe aufweisen. Demnach werden die n-1 Karosserien mit jenem Bereich voran in dem Container angeordnet, der eine größere Höhe aufweist. Die n-te Karosserie wird mit jenem Bereich voran in dem Container angeordnet, der die geringere Höhe aufweist.

Dabei wird für den Fall, dass ein Bereich des Bugs die geringste Höhe der Karosserie aufweist, jede dieser n-1 Karosserien mit ihrem Heck voran in dem Innenraum angeordnet, wobei die maximale Höhe jedes dieser n-1 Transportgestelle mit der darauf angeordneten Karosserie durch Verlängern der mindestens einen Abstützeinrichtung auf den Wert eingestellt wird, der größer als die Türhöhe t, aber maximal so groß wie die Deckenhöhe d ist. Dabei wird ein Bug jeder der n-1 Karosserien in dem Innenraum höher als deren Heck angeordnet. Außerdem wird unter dem Bug einer zunächst in dem Innenraum angeordneten Karosserie das Heck der nachfolgend in dem Innenraum angeordneten Karosserie angeordnet. Danach wird ein n-tes Transportgestell mit einer n-ten darauf angeordneten Karosserie in dem Innenraum angeordnet, wobei die n-te Karosserie mit dem Bug voran in dem Innenraum angeordnet wird. Außerdem wird der Bug dieser n-ten Karosserie unter dem Bug einer unmittelbar zuvor in dem Innenraum angeordneten, n-1-ten Karosserie angeordnet.

Jeweils eine Karosserie kann für ein Kraftfahrzeug mit einer offenen Bauform oder einer geschlossenen Bauform bspw. als Limousine ausgebildet sein. Dabei ist vorgesehen, dass eine Karosserie im Bereich des Bugs eine minimale vertikale Höhe aufweist, die maximal so groß wie eine minimale vertikale Höhe im Bereich des Hecks ausgebildet sein kann. Bei einer Karosserie für ein Kraftfahrzeug mit einer geschlossenen Bauform weist diese im Bereich des Bugs eine vertikale Höhe auf, die geringer als deren vertikale Höhe im Bereich mindestens einer Säule, d. h. A-Säule, B-Säule und/oder C-Säule ist, die ein Dach eines Innenraums für den Fahrer des Kraftfahrzeugs trägt. Demnach ist die vertikale Höhe im Bereich des Bugs geringer als jene im Bereich des Dachs. Falls der Bereich des Hecks die geringste vertikale Höhe aufweist, ist es möglich, jede der n-1 Karosserien mit dem Bug voran und die n-te Karosserie mit dem Heck voran in dem Innenraum des Containers anzuordnen.

Jeweils ein Transportgestell für eine Karosserie umfasst wenigstens ein hinteres und ein vorderes Abstützelement bzw. die hintere und vordere Abstützeinrichtung zur Halterung der Karosserie, wobei bspw. das vordere Abstützelement gegenüber dem hinteren erhöht und brückenähnlich ausgestaltet ist. Weiterhin ist das vordere Abstützelement relativ zu dem hinteren Abstützelement höhenverstellbar.

Eine Höhenverstellung der mindestens einen Abstützeinrichtung wird bspw. mittels einer temporär angesetzten Spindel ermöglicht.

Dabei ist zumindest das vordere Abstützelement in seiner Höhenverstellung arretierbar, wenn es auf eine jeweils vorgesehene Länge eingestellt worden ist.

Das System zum Transport der Karosserien umfasst den Container und mehrere in diesem anordenbare Transportgestelle.

Bei dem Verfahren zum Anordnen der Karosserien in dem Container wird jeweils eine Karosserie auf einem Transportgestell angeordnet und durch die Türöffnung hindurch in den Container eingefahren. Dann wird die Länge des vorderen Abstützelements verändert, wobei eine Schrägstellung der darauf angeordneten Karosserie erhöht wird. Diese Schritte werden für jede Karosserie durchgeführt, wobei nacheinander mehrere Karosserien auf Transportgestellen angeordnet werden. Jedes Transportgestell mit der darauf angeordneten Karosserie wird zunächst auf die Verladehöhe eingestellt. Sobald ein jeweiliges Transportgestell mit der darauf angeordneten Karosserie durch die Türöffnung hindurch in dem Innenraum angeordnet worden ist, wird für das jeweilige Transportgestell und die darauf angeordnete Karosserie in der Regel eine jeweils vorgesehene Versandhöhe eingestellt, wobei für jedes Transportgestell mit der darauf angeordneten Karosserie eine andere, individuell vorgesehene Versandhöhe eingestellt wird. Nachfolgend wird eine weitere Karosserie auf einem weiteren Transportgestell durch die Türöffnung hindurch in dem Innenraum angeordnet, wobei das Transportgestell mit der darauf angeordneten Karosserie eine Höhe aufweist, die geringer als die Türhöhe t ist. Danach wird die Höhe der ersten Abstützeinrichtung auf einen Wert eingestellt, der größer als die Türhöhe t, aber geringer als die Deckenhöhe d ist.

Die Karosserien werden auf den Transportgestellen derart schräg gestellt angeordnet, dass ein vorderer Bereich bzw. Bug einer hinteren Karosserie über einem hinteren Bereich bzw. Heck einer davor angeordneten Karosserie befindlich ist, so dass sich dadurch eine erhöhte Packungsdichte ergibt.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt in schematischer Darstellung ein erstes Detail einer Ausführungsform des erfindungsgemäßen Systems in zwei unterschiedlichen Betriebssituationen.
Figur 2 zeigt in schematischer Darstellung ein zweites Detail der Ausführungsform des erfindungsgemäßen Systems in zwei unterschiedlichen Betriebssituationen.
Figur 3 zeigt in schematischer Darstellung ein drittes Detail der Ausführungsform des erfindungsgemäßen Systems.

Die Figuren werden zusammenhängend und übergreifend beschrieben, gleichen Komponenten sind dieselben Bezugsziffern zugeordnet.

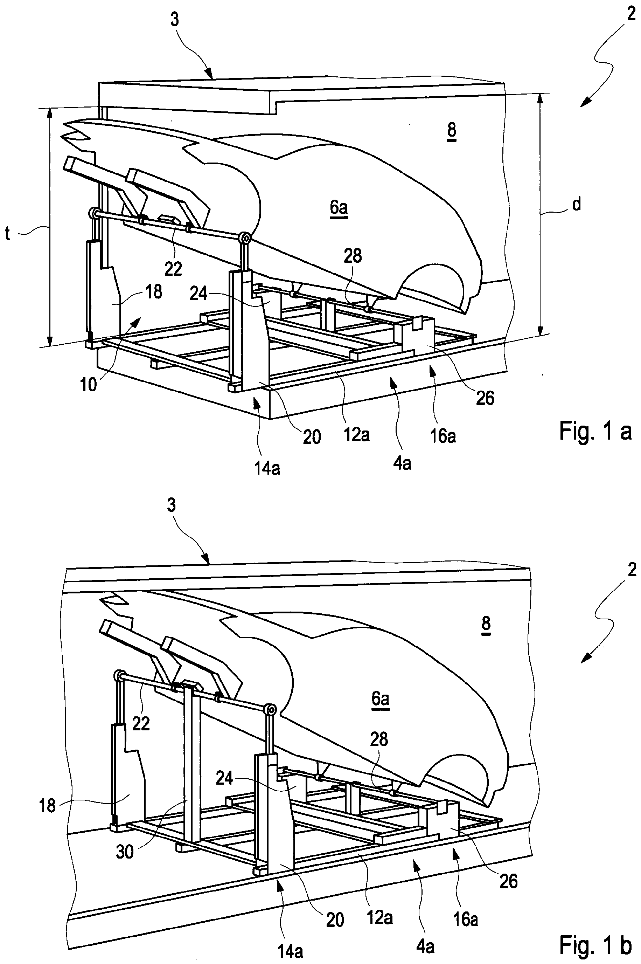

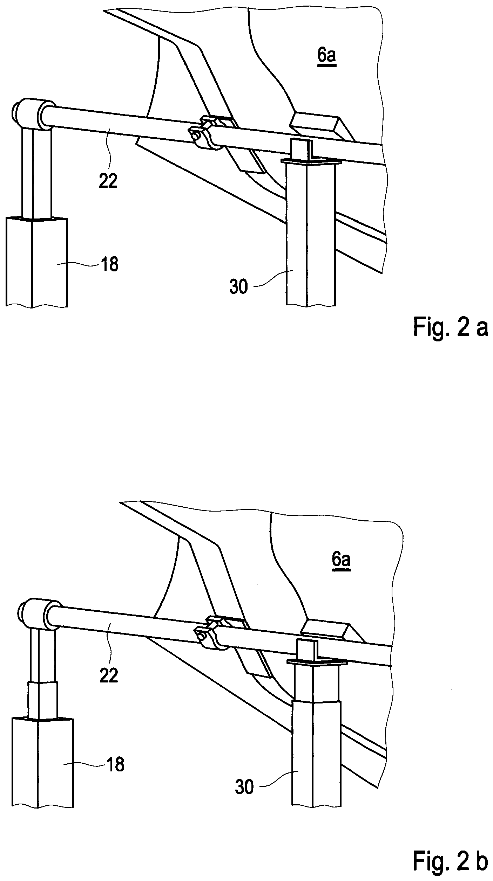

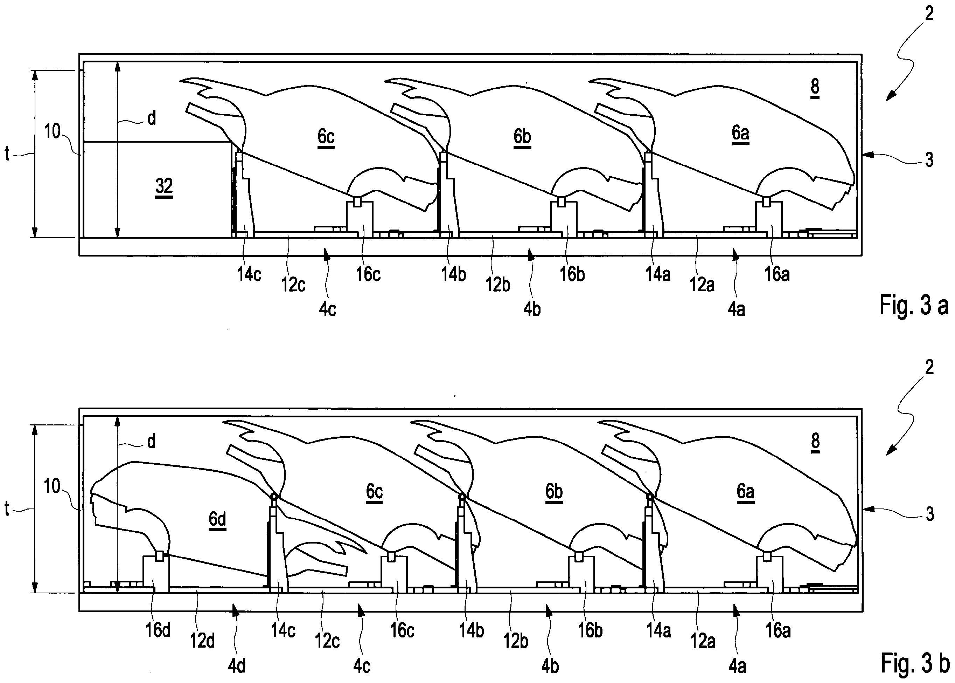

Die Ausführungsform des erfindungsgemäßen Systems 2 umfasst einen Container 3, der in den Figuren 1a und 1b teilweise und in den Figuren 3a und 3b komplett dargestellt ist. Außerdem umfasst das System 2 mehrere Karosserieracks als Transportgestelle 4a, 4b, 4c, 4d für jeweils eine Karosserie 6a, 6b, 6c, 6d, wobei in den Figuren 1a und 1b jeweils ein erstes Transportgestell 4a mit einer ersten darauf angeordneten Karosserie 6a dargestellt ist. Details dieses ersten Transportgestells 4a sind in Figur 2b gezeigt. In den Figuren 3a und 3b sind neben dem ersten Transportgestell 4a mit der ersten darauf angeordneten Karosserie 6a noch weitere Transportgestelle 4b, 4c, 4d mit jeweils darauf angeordneten Karosserien 6b, 6c, 6d gezeigt.

Wie aus den Figuren 1a, 1b, 3a, 3b hervorgeht, weist der Container 3 einen quaderförmigen Innenraum 8 mit einer Deckenhöhe d auf, die sich von einem Boden des Innenraums bis zu einer Decke des Innenraums 8 erstreckt. Außerdem umfasst der Container 3 eine Türöffnung 10, durch die der Innenraum 8 des Containers 3 von außen zugänglich ist. Diese Türöffnung 10 ist durch mindestens eine Tür bzw. mindestens einen Türflügel, in der Regel zwei Türen bzw. zwei Türflügel, verschließbar. Bei dem Container 3 ist weiterhin vorgesehen, dass die Türöffnung 10 eine Türhöhe t aufweist, die etwas geringer als die Deckenhöhe d des Innenraums 8 des Containers 3 ist.

Zum Transport von Gütern werden üblicherweise in ihren Abmessungen normierte Container 3 verwendet. Dabei kann bspw. vorgesehen sein, dass die Türhöhe t ca. 259,0 cm beträgt, wohingegen die Deckenhöhe d bzw. Innenhöhe des Innenraums 8 des Containers ca. 269,7 cm beträgt.

Unabhängig von absoluten, in der Regel normierten Werten der Deckenhöhe d und der Türhöhe t ist die Deckenhöhe d größer als die Türhöhe t.

Jedes Transportgestell 4a, 4b, 4c, 4d bzw. Traggestell umfasst hier einen Grundrahmen 12a, 12b, 12c, 12d mit jeweils einer ersten Abstützeinrichtung 14a, 14b, 14c, 14d und einer zweiten Abstützeinrichtung 16a, 16b, 16c, 16d, wobei hier in Figur 3b die erste Abstützeinrichtung des vierten Transportgestells 4d von der ersten Abstützeinrichtung 14c des dritten Transportgestells abgedeckt ist.

Wie insbesondere aus den Figuren 1a, 1b, 2a, 2d hervorgeht, weist jede erste Abstützeinrichtung 14a, 14b, 14c, ein erstes Abstützbein 18 und ein zweites Abstützbein 20, die hier beide teleskopierbar und somit in ihrer Länge variierbar bzw. veränderbar sind, auf. Diese beiden Abstützbeine 18, 20 sind einerseits an dem Grundgestell 12a befestigt und weiterhin über eine hier als Stange ausgebildete Halteeinrichtung 22 miteinander verbunden. Jede zweite Abstützeinrichtung 16a, 16b, 16c, 16d umfasst hier ebenfalls ein erstes Abstützbein 24 und ein zweites Abstützbein 26, die beide an dem Grundrahmen 12a, 12b, 12c, 12d befestigt sind und ebenfalls über eine als Stange ausgebildete Halteeinrichtung 28 miteinander verbunden sind. Dabei ist es ebenfalls möglich, aber nicht zwingend vorgesehen, dass die Abstützbeine 24, 26 der zweiten Abstützeinrichtungen 16a, 16b, 16c, 16d in ihrer Höhe bzw. Länge verstellbar sind, so dass auch eine jeweilige zweite Abstützeinrichtung 16a, 16b, 16c, 16d in ihrer Länge bzw. Höhe verstellbar ist.

Eine Ausführungsform des erfindungsgemäßen Verfahrens ist mit den in den Figuren vorgestellten Transportgestellen 4a, 4b, 4c, 4d durchführbar. Hierbei ist vorgesehen, dass jeweils eine zu transportierende Karosserie 6a, 6b, 6c, 6d außerhalb des Containers 3 frei auf einem jeweiligen Transportgestell 4a, 4b, 4c, 4d angeordnet wird. Dabei wird jeweils ein vorderer Radkasten auf der Halteeinrichtung 22 der vorderen Abstützeinrichtung 14a, 14b, 14c angeordnet, wohingegen ein hinterer Radkasten einer jeweiligen Karosserie 6a, 6b, 6c, 6d auf der Halteeinrichtung 28 der zweiten, hinteren Abstützeinrichtung 16a, 16b, 16c, 16d angeordnet wird. Dabei wird die jeweilige Karosserie 6a, 6b, 6c, 6d auf der Halteeinrichtung 22 der ersten Abstützeinrichtung 14a, 14b, 14c lediglich aufgelegt, wohingegen die jeweilige Karosserie 6a, 6b, 6c, 6d an der Halteeinrichtung 28 der zweiten Abstützeinrichtung 16a, 16b, 16c, 16d durch Verschrauben befestigt wird, aber dennoch um die hier als Stange ausgebildete Halteeinrichtung 28 als Rotationsachse gedreht werden kann. Hierzu ist vorgesehen, dass die Halteeinrichtung 28 der zweiten Abstützeinrichtung 16a, 16b, 16c, 16d an den Abstützbeinen 24, 26 drehbar gelagert ist. Außerdem kann auch die Halteeinrichtung 22 der ersten Abstützeinrichtung 14a, 14b, 14c an den Abstützbeinen 18, 20 drehbar gelagert sein.

Wie die Figuren zeigen, ist hier für das erste, zweite und dritte Transportgestell 4a, 4b, 4c vorgesehen, dass die erste Abstützeinrichtung 14a, 14b, 14c länger als die zweite Abstützeinrichtung 16a, 16b, 16c eingestellt ist. Demnach sind die erste, zweite und dritte Karosserie 6a, 6b, 6c auf einem jeweils vorgesehenen Transportgestell 4a, 4b, 4c schräg angeordnet. Zum Verladen jeder der ersten drei Karosserien 6a, 6b, 6c wird eine jeweilige erste Abstützeinrichtung 14a, 14b, 14c hinsichtlich ihrer Länge bzw. Höhe auf eine Verladehöhe eingestellt. Dabei weisen das Transportgestell 4a, 4b, 4c, 4d und die darauf angeordnete Karosserie 6a, 6b, 6c, 6d eine maximale Höhe bzw. Verladehöhe auf, die geringer als die Türhöhe t ist. Die für ein jeweiliges Transportgestell 4a, 4b, 4c mit der jeweils darauf angeordneten Karosserie 6a, 6b, 6c vorgesehene Verladehöhe beträgt hier bspw. 255,0 cm. Durch Einstellen dieser Verladehöhe ist es möglich, das Transportgestell 4a, 4b, 4c, 4d mit der darauf angeordneten Karosserie 6a, 6b, 6c, 6d durch die Türöffnung 10 hindurch in den Innenraum des Containers zu transportieren. Sobald jeweils eines der ersten drei genannten Transportgestelle 4a, 4b, 4c mit einer jeweiligen Karosserie 6a, 6b, 6c in dem Innenraum 8 vollständig angeordnet ist, wird die Höhe bzw. Länge der jeweiligen ersten Abstützeinrichtung 14a, 14b, 14c vergrößert und auf eine für den Transport vorgesehene Versandhöhe bzw. Transporthöhe eingestellt. Zum Verändern der Länge einer jeweiligen ersten Abstützeinrichtung 14a, 14b, 14c wird hier eine Spindel 30 verwendet, die in den Figuren 1b, 2a, 2b gezeigt ist. Die Versandhöhe, auf die eine jeweilige erste Abstützvorrichtung 14a, 14b, 14c ausgehend von der Verladehöhe eingestellt wird, ist höher als die Türhöhe t, jedoch geringer als die Deckenhöhe d, so dass die Karosserie 6a, 6b, 6c die Decke des Containers 3 in dem Innenraum 8 nicht berührt. In Ausgestaltung ist hier vorgesehen, dass die Versandhöhe hier bspw. 264,7 cm beträgt.

Bei der Ausführungsform des Verfahrens können hier insgesamt vier Karosserien 6a, 6b, 6c, 6d auf jeweiligen Transportgestellen 4a, 4b, 4c, 4d in dem Innenraum 8 des Containers 3 angeordnet werden. Entsprechend wird jedes der ersten drei Transportgestelle 4a, 4b, 4c mit der zweiten Abstützeinrichtung 16a, 16b, 16c voran in dem Innenraum 8 des Containers 3 angeordnet. Dabei werden zunächst die erste, zweite und dritte Karosserie 6a, 6b, 6c mit einem jeweiligen Heck voran durch die Türöffnung 10 in den Innenraum 8 eingeführt, dabei weisen, wie Figur 3a zeigt, die ersten drei Karosserien 6a, 6b, 6c und die Transportgestelle 4a, 4b, 4c, auf denen diese Karosserien 6a, 6b, 6c jeweils angeordnet sind, zunächst lediglich die Verladehöhe auf.

Wie Figur 3a weiterhin zeigt, weist der Innenraum 8 des Containers 3 hier einen durch ein weißes Rechteck gekennzeichneten ungenutzten Raumbereich 32 auf. Zum Vergrößern dieses zunächst noch ungenutzten Raumbereichs 32 werden die ersten Abstützeinrichtungen 14a, 14b, 14c der ersten drei Transportgestelle 4a, 4b, 4c ausgehend von der Verladehöhe (Figur 3a) auf die Versandhöhe (Figur 3b) verlängert bzw. vergrößert, wodurch die darauf angeordneten Karosserien 6a, 6b, 6c innerhalb des Innenraums 8 noch schräger eingestellt werden. Hierdurch ergibt sich, dass die ersten drei Transportgestelle 4a, 4b, 4c mit den darauf angeordneten Karosserien 6a, 6b, 6c näher aneinander geschoben werden können, wodurch sich der Raumbereich 32 vergrößert.

Somit ist es möglich, in dem Innenraum 8 des Containers 3 noch das vierte Transportgestell 4d mit der vierten darauf angeordneten Karosserie 6d in dem Innenraum 8 anzuordnen, wobei hierbei die vierte Karosserie 6d mit einem Bug voran in dem Innenraum 8 angeordnet wird, wobei der Radkasten der vierten Karosserie 6d auf der ersten Abstützeinrichtung des vierten Transportgestells 4d angeordnet ist, die hier durch die erste Abstützeinrichtung 14c des dritten Transportgestells 4c abgedeckt ist. Dabei weist die erste Abstützeinrichtung des vierten Transportgestells 4d eine geringere Länge bzw. Höhe als die zweite Abstützeinrichtung 16d des vierten Transportgestells 4d auf. Somit ist es möglich, den Bug der vierten Karosserie 6d unter dem Heck der dritten Karosserie 6c anzuordnen.

## Patentansprüche

1. System zum Transportieren mehrerer Karosserien (6a, 6b, 6c, 6d) für Kraftfahrzeuge in einem Container (3), wobei das System den Container (3) umfasst und dieser einen quaderförmigen Innenraum (8) mit einer Deckenhöhe d und eine Türöffnung (10) mit einer Türhöhe t aufweist, wobei die Türhöhe t geringer als die Deckenhöhe d ist, wobei das System (2) für jede zu transportierende Karosserie (6a, 6b, 6c, 6d) ein Transportgestell (4a, 4b, 4c, 4d) aufweist, wobei jedes Transportgestell (4a, 4b, 4c, 4d) eine erste Abstützeinrichtung (14a, 14b, 14c) und eine zweite Abstützeinrichtung (16a, 16b, 16c, 16d) aufweist, wobei eine Länge mindestens einer Abstützeinrichtung (14a, 14b, 14c, 16a, 16b, 16c, 16d) veränderbar ist, wobei jede zu transportierende Karosserie (6a, 6b, 6c, 6d) auf jeweils einem Transportgestell (4a, 4b, 4c, 4d) anzuordnen ist, wobei eine maximale Höhe des Transportgestells (4a, 4b, 4c, 4d) mit der darauf angeordneten Karosserie (6a, 6b, 6c, 6d) auf einen Wert, der geringer als die Türhöhe t ist, einzustellen ist, wobei das Transportgestell (4a, 4b, 4c, 4d) mit der darauf angeordneten Karosserie (6a, 6b, 6c, 6d) durch die Türöffnung (10) zu führen und in dem Innenraum (8) des Containers (3) anzuordnen ist, **dadurch gekennzeichnet, dass** die maximale Höhe mindestens eines Transportgestells (4a, 4b, 4c, 4d) mit der darauf angeordneten Karosserie (6a, 6b, 6c, 6d) durch Verlängern der mindestens einen Abstützeinrichtung (14a, 14b, 14c, 16a, 16b, 16c, 16d) auf einen Wert einzustellen ist, der größer als die Türhöhe t, aber maximal so groß wie die Deckenhöhe d ist, wobei jede Abstützeinrichtung (14a, 14b, 14c, 16a, 16b, 16c, 16d) eine Halteeinrichtung (22, 28) aufweist, auf der die Karosserie (6a, 6b, 6c, 6d) anordenbar ist, wobei bei Verändern der Länge der mindestens einen Abstützeinrichtung (14a, 14b, 14c, 16a, 16b, 16c, 16d) ein Abstand einer Halteeinrichtung (22, 28) der mindestens einen Abstützeinrichtung (14a, 14b, 14c, 16a, 16b, 16c, 16d) zu einem Grundrahmen (12a, 12b, 12c, 12d) hinsichtlich seiner Höhe einstellbar ist.

2. System nach Anspruch 1, bei dem lediglich die Länge einer der beiden Abstützeinrichtungen (14a, 14b, 14c, 16a, 16b, 16c, 16d) mindestens eines Transportgestells (4a, 4b, 4c, 4d) veränderbar ist, wohingegen die Länge der anderen der beiden Abstützeinrichtungen (14a, 14b, 14c, 16a, 16b, 16c, 16d) des mindestens einen Transportgestells (4a, 4b, 4c, 4d) konstant ist.

3. System nach Anspruch 1 oder 2, bei dem die Längen beider Abstützeinrichtungen (14a, 14b, 14c, 16a, 16b, 16c, 16d) mindestens eines Transportgestells (4a, 4b, 4c, 4d) veränderbar sind.

4. System nach einem der voranstehenden Ansprüche, bei dem eine Länge einer längeren Abstützeinrichtung (14a, 14b, 14c, 16a, 16b, 16c, 16d) zu verlängern ist, nach dem das Transportgestell (4a, 4b, 4c, 4d) mit der darauf angeordneten Karosserie (6a, 6b, 6c, 6d) in dem Innenraum (8) angeordnet worden ist.

5. System nach einem der voranstehenden Ansprüche, bei dem eine Länge einer kürzeren Abstützeinrichtung (14a, 14b, 14c, 16a, 16b, 16c, 16d) zu verkürzen ist, nach dem das Transportgestell (4a, 4b, 4c, 4d) mit der darauf angeordneten Karosserie (6a, 6b, 6c, 6d) in dem Innenraum (8) angeordnet worden ist.

6. System nach einem der voranstehenden Ansprüche, bei dem die Karosserie auf einer ersten Halteeinrichtung (22) auflegbar und an einer zweiten Halteeinrichtung (28) befestigbar ist.

7. System nach einem der voranstehenden Ansprüche, bei dem die mindestens eine Abstützeinrichtung (14a, 14b, 14c, 16a, 16b, 16c, 16d) eine Spindel (30) aufweist, mit der deren Länge veränderbar ist.

8. Verfahren zum Transportieren mehrerer Karosserien (6a, 6b, 6c, 6d) für Kraftfahrzeuge in einem Container (3), wobei der Container (3) einen quaderförmigen Innenraum (8) mit einer Deckenhöhe d und eine Türöffnung (10) mit einer Türhöhe t aufweist, wobei die Türhöhe t geringer als die Deckenhöhe d ist, wobei für jede zu transportierende Karosserie (6a, 6b, 6c, 6d) ein Transportgestell (4a, 4b, 4c, 4d) verwendet wird, wobei jedes Transportgestell (4a, 4b, 4c, 4d) eine erste Abstützeinrichtung (14a, 14b, 14c) und eine zweite Abstützeinrichtung (16a, 16b, 16c, 16d) aufweist, wobei eine Länge mindestens einer Abstützeinrichtung (14a, 14b, 14c, 16a, 16b, 16c, 16d) veränderbar ist, wobei jede zu transportierende Karosserie (6a, 6b, 6c, 6d) auf jeweils einem Transportgestell (4a, 4b, 4c, 4d) angeordnet wird, wobei eine maximale Höhe des Transportgestells (4a, 4b, 4c, 4d) mit der darauf angeordneten Karosserie (6a, 6b, 6c, 6d) auf einen Wert, der geringer als die Türhöhe t ist, eingestellt wird, wobei das Transportgestell (4a, 4b, 4c, 4d) mit der darauf angeordneten Karosserie (6a, 6b, 6c, 6d) durch die Türöffnung (10) geführt und in dem Innenraum (8) des Containers (3) angeordnet wird, **dadurch gekennzeichnet, dass** die maximale Höhe mindestens eines Transportgestells (4a, 4b, 4c, 4d) mit der darauf angeordneten Karosserie (6a, 6b, 6c, 6d) durch Verlängern der mindestens einen Abstützeinrichtung (14a, 14b, 14c, 16a, 16b, 16c, 16d) auf einen Wert eingestellt wird, der größer als die Türhöhe t, aber maximal so groß wie die Deckenhöhe d ist, wobei jede Abstützeinrichtung (14a, 14b, 14c, 16a, 16b, 16c, 16d) eine Halteeinrichtung (22, 28) aufweist, auf der die Karosserie (6a, 6b, 6c, 6d) angeordnet wird, wobei bei Verändern der Länge der mindestens einen Abstützeinrichtung (14a, 14b, 14c, 16a, 16b, 16c, 16d) ein Abstand einer Halteeinrichtung (22, 28) der mindestens einen Abstützeinrichtung (14a, 14b, 14c, 16a, 16b, 16c, 16d) zu einem Grundrahmen (12a, 12b, 12c, 12d) hinsichtlich seiner Höhe eingestellt wird.

9. Verfahren nach Anspruch 8, bei dem mehrere Transportgestelle (4a, 4b, 4c, 4d) mit darauf angeordneten Karosserien (6a, 6b, 6c, 6d) hintereinander in dem Container (3) angeordnet werden, wobei mindestens eine Karosserie (6a, 6b, 6c, 6d) zumindest teilweise oberhalb einer anderen Karosserie (6a, 6b, 6c, 6d) angeordnet wird.

10. Verfahren nach Anspruch 8 oder 9, bei dem vorgesehen ist, dass jede Karosserie (6a, 6b, 6c, 6d) jeweils einen als Bug ausgebildeten vorderen Endbereich und einen als Heck ausgebildeten hinteren Endbereich aufweist, wobei jeder dieser beiden Endbereiche eine vertikale Höhe aufweist, wobei jener Endbereich, der eine geringere vertikale Höhe aufweist, auf einer längeren der beiden Abstützeinrichtungen (14a, 14b, 14c, 16a, 16b, 16c, 16d) und jener Endbereich, der eine größere vertikale Höhe aufweist, auf einer kürzeren der beiden Abstützeinrichtungen (14a, 14b, 14c, 16a, 16b, 16c, 16d) angeordnet wird.

11. Verfahren nach Anspruch 10, bei dem n Transportgestelle (4a, 4b, 4c, 4d) mit darauf angeordneten Karosserien (6a, 6b, 6c, 6d) mit dem Container zu transportieren sind, wobei zunächst n-1 Transportgestelle (4a, 4b, 4c) mit n-1 darauf angeordneten Karosserien (6a, 6b, 6c) nacheinander in dem Innenraum (8) angeordnet werden, wobei jede dieser n-1 Karosserien mit ihrem Endbereich, der die größere vertikale Höhe aufweist, voran in dem Innenraum (8) angeordnet wird, wobei die maximale Höhe jedes dieser n-1 Transportgestelle (4a, 4b, 4c) mit der darauf angeordneten Karosserie (6a, 6b, 6c) durch Verlängern der mindestens einen Abstützeinrichtung (14a, 14b, 14c, 16a, 16b, 16c, 16d) auf den Wert eingestellt wird, der größer als die Türhöhe t, aber maximal so groß wie die Deckenhöhe d ist, wobei danach ein n-tes Transportgestell (4d) mit einer n-ten darauf angeordneten Karosserie (6d) in dem Innenraum (8) angeordnet wird, wobei die n-te Karosserie (6d) mit ihrem Endbereich, der die geringere vertikale Höhe aufweist, voran in dem Innenraum (8) angeordnet wird.

12. Verfahren nach Anspruch 10 oder 11, bei dem n Transportgestelle (4a, 4b, 4c, 4d) mit darauf angeordneten Karosserien (6a, 6b, 6c, 6d) mit dem Container zu transportieren sind, wobei zunächst n-1 Transportgestelle (4a, 4b, 4c) mit n-1 darauf angeordneten Karosserien (6a, 6b, 6c) nacheinander in dem Innenraum (8) angeordnet werden, wobei jede dieser n-1 Karosserien mit ihrem Endbereich, der die größere vertikale Höhe aufweist, voran in dem Innenraum (8) angeordnet wird, wobei die maximale Höhe jedes dieser n-1 Transportgestelle (4a, 4b, 4c) mit der darauf angeordneten Karosserie (6a, 6b, 6c) durch Verlängern der mindestens einen Abstützeinrichtung (14a, 14b, 14c, 16a, 16b, 16c, 16d) auf den Wert eingestellt wird, der größer als die Türhöhe t, aber maximal so groß wie die Deckenhöhe d ist, wobei danach ein n-tes Transportgestell (4d) mit einer n-ten darauf angeordneten Karosserie (6d) in dem Innenraum (8) angeordnet wird, wobei die n-te Karosserie (6d) mit ihrem Endbereich, der die geringere vertikale Höhe aufweist, voran in dem Innenraum (8) angeordnet wird.

## Claims

1. System for transporting multiple bodies (6a, 6b, 65c, 6d) for motor vehicles in a container (3), wherein the system comprises a container (3) and said container has a cuboidal interior (8) with a ceiling height d and a door opening (10) with a door height t, wherein the door height t is lower than the ceiling height d, wherein the system (2) has a transport frame (4a, 4b, 4c, 4d) for each body (6a, 6b, 6c, 6d) to be transported, wherein each transport frame (4a, 4b, 4c, 4d) has a first support device (14a, 14b, 14c) and a second support device (16a, 16b, 16c, 16d), wherein a length of at least one support device (14a, 14b, 14c, 16a, 16b, 16c, 16d) can be changed, wherein each body (6a, 6b, 6c, 6d) to be transported is to be arranged on a respective transport frame (4a, 4b, 4c, 4d), wherein a maximum height of the transport frame (4a, 4b, 4c, 4d) with the body (6a, 6b, 6c, 6d) arranged thereon is to be set to a value, which is lower than the door height t, wherein the transport frame (4a, 4b, 4c, 4d) with the body (6a, 6b, 6c, 6d) arranged thereon is to be guided through the door opening (10) and is to be arranged in the interior (8) of the container (3), **characterised in that** the maximum height of at least one transport frame (4a, 4b, 4c, 4d) with the body (6a, 6b, 6c, 6d) arranged thereon is to be set to a value, which is higher than the door height t, but maximally as high as the ceiling height d, by extending the at least one support device (14, 14b, 14c, 16a, 16b, 16c, 16d), wherein each support device (14a, 14b, 14c, 16a, 16b, 16c, 16d) has a retaining device (22, 28), on which the body (6a, 6b, 6c, 6d) can be arranged, wherein when changing the length of the at least one support device (14a, 14b, 14c, 16a, 16b, 16c, 16d) a distance of a retaining device (22, 28) of the at least one support device (14a, 14b, 14c, 16a, 16b, 16c, 16d) to a base frame (12a, 12b, 12c, 12d) can be set with respect to its height.

2. System according to claim 1, in which only the length of one of the two support devices (14a, 14b, 14c, 16a, 16b, 16c, 16d) at least of one transport frame (4a, 4b, 4c, 4d) can be changed, whereas the length of the other of the wo support devices (14a, 14b, 14c, 16a, 16b, 16c, 16d) of the at least one transport frame (4a, 4b, 4c, 4d) is constant.

3. System according to claim 1 or 2, in which the lengths of both support devices (14a, 14b, 14c, 16a, 16b, 16c, 16d) at least of one transport frame (4a, 4b, 4c, 4d) can be changed.

4. System according to any one of the preceding claims, in which a length of a longer support device (14a, 14b, 14c, 16a, 16b, 16c, 16d) is to be extended, after which the transport frame (4a, 4b, 4c, 4d) with the body (6a, 6b, 6c, 6d) arranged thereon has been arranged in the interior (8).

5. System according to any one of the preceding claims, in which a length of a shorter support device (14a, 14b, 14c, 16a, 16b, 16c, 16d), is to be shortened, after which the transport frame (4a, 4b, 4c, 4d) with the body (6a, 6b, 6c, 6d) has been arranged in the interior (8).

6. System according to any one of the preceding claims, in which the body can be placed on a first retaining device (22) and can be fastened to a second retaining device (28).

7. System according to any one of the preceding claims, in which the at least one support device (14a, 14b, 14c, 16a, 16b, 16c, 16d) has a spindle (30), with which its length can be changed.

8. Method for transporting multiple bodies (6a, 6b, 65c, 6d) for motor vehicles in a container (3), wherein the container (3) has a cuboidal interior (8) with a ceiling height d and a door opening (10) with a door height t, wherein the door height t is lower than the ceiling height d, wherein for each body (6a, 6b, 6c, 6d) to be transported a transport frame (4a, 4b, 4c, 4d) is used, wherein each transport frame (4a, 4b, 4c, 4d) has a first support device (14a, 14b, 14c) and a second support device (16a, 16b, 16c, 16d), wherein a length at least of one support device (14a, 14b, 14c, 16a, 16b, 16c, 16d) can be changed, wherein each body (6a, 6b, 6c, 6d) to be transported is arranged on a respective transport frame (4a, 4b, 4c, 4d), wherein a maximum height of the transport frame (4a, 4b, 4c, 4d) with the body (6a, 6b, 6c, 6d) arranged thereon is set to a value, which is lower than the door height t, wherein the transport frame (4a, 4b, 4c, 4d) with the body (6a, 6b, 6c, 6d) arranged thereon is guided through the door opening (10) and is arranged in the interior (8) of the container (3), **characterised in that** the maximum height at least of one transport frame (4a, 4b, 4c, 4d) with the body (6a, 6b, 6c, 6d) arranged thereon is set to a value, which is higher than the door height t, but maximally as high as the ceiling height d, by extending the at least one support device (14, 14b, 14c, 16a, 16b, 16c, 16d), wherein each support device (14a, 14b, 14c, 16a, 16b, 16c, 16d) has a retaining device (22, 28), on which the body (6a, 6b, 6c, 6d) is arranged, wherein when changing the length of the at least one support device (14a, 14b, 14c, 16a, 16b, 16c, 16d) a distance of a retaining device (22, 28) of the at least one support device (14a, 14b, 14c, 16a, 16b, 16c, 16d) to a base frame (12a, 12b, 12c, 12d) is set with respect to its height.

9. Method according to claim 8, in which multiple transport frames (4a, 4b, 4c, 4d) with bodies (6a, 6b, 6c, 6d) arranged there on are arranged one after another in the container (3), wherein at least one body (6a, 6b, 6c, 6d) is arranged at least partially above another body (6a, 6b, 6c, 6d).

10. Method according to claim 8 or 9, in which it is provided, that each body (6a, 6b, 6c, 6d) in each case has a front end region designed as a front and a rear end region designed as a rear, wherein each of these two end regions has a vertical height, wherein that end region, which has a lower vertical height is arranged on a longer of the two support devices (14a, 14b, 14c, 16a, 16b, 16c, 16d) and that end region, which has a higher vertical height, is arranged on a shorter of the two support devices (14a, 14b, 14c, 16a, 16b, 16c, 16d).

11. Method according to claim 10, in which n transport frames (4a, 4b, 4c, 4d) with bodies (6a, 6b, 6c, 6d) arranged thereon are to be transported with the container, wherein initially n-1 transport frames (4a, 4b, 4c) with n-1 bodies (6a, 6b, 6c) arranged thereon are arranged successively in the interior (8), wherein each of said n-1 bodies with its end region, which has the higher vertical height, is arranged to the fore in the interior (8), wherein the maximum height of each of said n-1 transport frames (4a, 4b, 4c) with the body (6a, 6b, 6c) arranged thereon is set to the value, which is higher than the door height t, but maximally as high as the ceiling height d, by extending the at least one support device (14a, 14b, 14c, 16a, 16b, 16c, 16d), wherein thereafter an nth transport frame (4d) with an nth body (6d) arranged thereon is arranged in the interior (8), wherein the nth body (6d) with its end region, which has a lower vertical height, is arranged to the fore in the interior (8).

12. Method according to claim 10 or 11, in which n transport frames (4a, 4b, 4c, 4d) with bodies (6a, 6b, 6c, 6d) arranged thereon are to be transported with the container, wherein initially n-1 transport frames (4a, 4b, 4c) with n-1 bodies (6a, 6b, 6c) arranged thereon are arranged successively in the interior (8), wherein each of said n-1 bodies with its end region, which has the higher vertical height, is arranged to the fore in the interior (8), wherein the maximum height of each of said n-1 transport frames (4a, 4b, 4c) with the body (6a, 6b, 6c) arranged thereon is set to the value, which is higher than the door height t, but maximally as high as the ceiling height d by extending the at least one support device (14a, 14b, 14c, 16a, 16b, 16c, 16d), wherein thereafter an nth transport frame (4d) with an nth body (6d) arranged thereon is arranged in the interior (8), wherein the nth body (6d) with its end region, which has the lower vertical height, is arranged to the fore in the interior (8).

## Revendications

1. Système de transport de plusieurs carrosseries (6a, 6b, 6c, 6d) pour véhicules automobiles dans un conteneur (3), dans lequel le système comprend le conteneur (3) et celui-ci présente un espace intérieur parallélépipédique (8) avec une hauteur de plafond d et une ouverture de porte (10) avec une hauteur de porte t, dans lequel la hauteur de porte t est inférieure à la hauteur de plafond d, dans lequel le système (2) présente pour chaque carrosserie à transporter (6a, 6b, 6c, 6d) un châssis de transport (4a, 4b, 4c, 4d), dans lequel chaque châssis de transport (4a, 4b, 4c, 4d) présente un premier dispositif de soutien (14a, 14b, 14c) et un deuxième dispositif de soutien (16a, 16b, 16c, 16d), dans lequel une longueur d'au moins un dispositif de soutien (14a, 14b, 14c, 16a, 16b, 16c, 16d) est modifiable, dans lequel chaque carrosserie à transporter (6a, 6b, 6c, 6d) doit être agencée sur respectivement un châssis de transport (4a, 4b, 4c, 4d), dans lequel une hauteur maximum du châssis de transport (4a, 4b, 4c, 4d) avec la carrosserie (6a, 6b, 6c, 6d) agencée dessus doit être réglée sur une valeur, qui est inférieure à la hauteur de porte t, dans lequel le châssis de transport (4a, 4b, 4c, 4d) avec la carrosserie (6a, 6b, 6c, 6d) agencée dessus doit être guidé par l'ouverture de porte (10) et agencé dans l'espace intérieur (8) du conteneur (3), **caractérisé en ce que** la hauteur maximum d'au moins un châssis de transport (4a, 4b, 4c, 4d) avec la carrosserie (6a, 6b, 6c, 6d) agencée dessus doit être réglée par prolongement de l'au moins un dispositif de soutien (14a, 14b, 14c, 16a, 16b, 16c, 16d) sur une valeur, qui est supérieure à la hauteur de porte t, mais au maximum aussi grande que la hauteur de plafond d, dans lequel chaque dispositif de soutien (14a, 14b, 14c, 16a, 16b, 16c, 16d) présente un dispositif de retenue (22, 28), sur lequel la carrosserie (6a, 6b, 6c, 6d) peut être agencée, dans lequel lors de la modification de la longueur de l'au moins un dispositif de soutien (14a, 14b, 14c, 16a, 16b, 16c, 16d), une distance d'un dispositif de retenue (22, 28) de l'au moins un dispositif de soutien (14a, 14b, 14c, 16a, 16b, 16c, 16d) par rapport à un cadre de base (12a, 12b, 12c, 12d) est réglable en ce qui concerne sa hauteur.

2. Système selon la revendication 1, dans lequel seule la longueur d'un des deux dispositifs de soutien (14a, 14b, 14c, 16a, 16b, 16c, 16d) d'au moins un châssis de transport (4a, 4b, 4c, 4d) est modifiable, alors que la longueur de l'autre des deux dispositifs de soutien (14a, 14b, 14c, 16a, 16b, 16c, 16d) de l'au moins un châssis de transport (4a, 4b, 4c, 4d) est constante.

3. Système selon la revendication 1 ou 2, dans lequel les longueurs des deux dispositifs de soutien (14a, 14b, 14c, 16a, 16b, 16c, 16d) d'au moins un châssis de transport (4a, 4b, 4c, 4d) est modifiable.

4. Système selon l'une quelconque des revendications précédentes, dans lequel une longueur d'un dispositif de soutien plus long (14a, 14b, 14c, 16a, 16b, 16c, 16d) doit être prolongée, après que le châssis de transport (4a, 4b, 4c, 4d) avec la carrosserie (6a, 6b, 6c, 6d) agencée dessus a été agencé dans l'espace intérieur (8).

5. Système selon l'une quelconque des revendications précédentes, dans lequel une longueur d'un dispositif de soutien plus court (14a, 14b, 14c, 16a, 16b, 16c, 16d) doit être raccourcie, après que le châssis de transport (4a, 4b, 4c, 4d) avec la carrosserie (6a, 6b, 6c, 6d) agencée dessus a été agencé dans l'espace intérieur (8).

6. Système selon l'une quelconque des revendications précédentes, dans lequel la carrosserie peut être posée sur un premier dispositif de retenue (22) et peut être fixée au niveau d'un deuxième dispositif de retenue (28).

7. Système selon l'une quelconque des revendications précédentes, dans lequel l'au moins un dispositif de soutien (14a, 14b, 14c, 16a, 16b, 16c, 16d) présente une broche (30), avec laquelle sa longueur est modifiable.

8. Procédé de transport de plusieurs carrosseries (6a, 6b, 6c, 6d) pour véhicules automobiles dans un conteneur (3), dans lequel le conteneur (3) présente un espace intérieur parallélépipédique (8) avec une hauteur de plafond d et une ouverture de porte (10) avec une hauteur de porte t, dans lequel la hauteur de porte t est inférieure à la hauteur de plafond d, dans lequel un châssis de transport (4a, 4b, 4c, 4d) est utilisé pour chaque carrosserie à transporter (6a, 6b, 6c, 6d), dans lequel chaque châssis de transport (4a, 4b, 4c, 4d) présente un premier dispositif de soutien (14a, 14b, 14c) et un deuxième dispositif de soutien (16a, 16b, 16c, 16d), dans lequel une longueur d'au moins un dispositif de soutien (14a, 14b, 14c, 16a, 16b, 16c, 16d) est modifiable, dans lequel chaque carrosserie à transporter (6a, 6b, 6c, 6d) est agencée sur respectivement un châssis de transport (4a, 4b, 4c, 4d), dans lequel une hauteur maximum du châssis de transport (4a, 4b, 4c, 4d) avec la carrosserie (6a, 6b, 6c, 6d) agencée dessus est réglée sur une valeur, qui est inférieure à la hauteur de porte t, dans lequel le châssis de transport (4a, 4b, 4c, 4d) avec la carrosserie (6a, 6b, 6c, 6d) agencée dessus est guidé par l'ouverture de porte (10) et agencé dans l'espace intérieur (8) du conteneur (3), **caractérisé en ce que** la hauteur maximum d'au moins un châssis de transport (4a, 4b, 4c, 4d) avec la carrosserie (6a, 6b, 6c, 6d) agencée dessus est réglée par prolongement de l'au moins un dispositif de soutien (14a, 14b, 14c, 16a, 16b, 16c, 16d) sur une valeur, qui est supérieure à la hauteur de porte t, mais au maximum aussi grande que la hauteur de plafond d, dans lequel chaque dispositif de soutien (14a, 14b, 14c, 16a, 16b, 16c, 16d) présente un dispositif de retenue (22, 28), sur lequel la carrosserie (6a, 6b, 6c, 6d) est agencée, dans lequel lors de la modification de la longueur de l'au moins un dispositif de soutien (14a, 14b, 14c, 16a, 16b, 16c, 16d), une distance d'un dispositif de retenue (22, 28) de l'au moins un dispositif de soutien (14a, 14b, 14c, 16a, 16b, 16c, 16d) par rapport à un cadre de base (12a, 12b, 12c, 12d) est réglé en ce qui concerne sa hauteur.

9. Procédé selon la revendication 8, dans lequel plusieurs châssis de transport (4a, 4b, 4c, 4d) avec des carrosseries (6a, 6b, 6c, 6d) agencées dessus sont agencés l'un derrière l'autre dans le conteneur (3), dans lequel au moins une carrosserie (6a, 6b, 6c, 6d) est agencée au moins en partie au-dessus d'une autre carrosserie (6a, 6b, 6c, 6d).

10. Procédé selon la revendication 8 ou 9, dans lequel il est prévu que chaque carrosserie (6a, 6b, 6c, 6d) présente respectivement une zone d'extrémité avant réalisée en tant que proue et une zone d'extrémité arrière réalisée en tant que poupe, dans lequel chacune de ces zones d'extrémité présente une hauteur verticale, dans lequel la zone d'extrémité, qui présente une hauteur verticale plus faible, est agencée sur un dispositif plus long des deux dispositifs de soutien (14a, 14b, 14c, 16a, 16b, 16c, 16d) et la zone d'extrémité, qui présente une hauteur verticale plus élevée, est agencée sur un dispositif plus court des deux dispositifs de soutien (14a, 14b, 14c, 16a, 16b, 16c, 16d).

11. Procédé selon la revendication 10, dans lequel n châssis de transport (4a, 4b, 4c, 4d) avec des carrosseries (6a, 6b, 6c, 6d) agencées dessus doivent être transportés avec le conteneur, dans lequel d'abord n-1 châssis de transport (4a, 4b, 4c) avec n-1 carrosseries (6a, 6b, 6c) agencées dessus sont agencés l'un après l'autre dans l'espace intérieur (8), dans lequel chacune de ces n-1 carrosseries avec sa zone d'extrémité, qui présente la plus grande hauteur verticale, est agencée devant dans l'espace intérieur (8), dans lequel la hauteur maximum de chacun de ses n-1 châssis de transport (4a, 4b, 4c) avec la carrosserie (6a, 6b, 6c) agencée dessus est réglée par prolongement de l'au moins un dispositif de soutien (14a, 14b, 14c, 16a, 16b, 16c, 16d) sur la valeur, qui est supérieure à la hauteur de porte t, mais au maximum aussi grande que la hauteur de plafond d, dans lequel ensuite un nième châssis de transport (4d) avec une nième carrosserie (6d) agencée dessus est agencé dans l'espace intérieur (8), dans lequel la nième carrosserie (6d) avec sa zone d'extrémité, qui présente la plus petite hauteur verticale, est agencée devant dans l'espace intérieur (8).

12. Procédé selon la revendication 10 ou 11, dans lequel n châssis de transport (4a, 4b, 4c, 4d) avec des carrosseries (6a, 6b, 6c, 6d) agencées dessus doivent être transportés avec le conteneur, dans lequel d'abord n-1 châssis de transport (4a, 4b, 4c) avec n-1 carrosseries (6a, 6b, 6c) agencées dessus sont agencés l'un après l'autre dans l'espace intérieur (8), dans lequel chacune de ces n-1 carrosseries avec sa zone d'extrémité, qui présente la plus grande hauteur verticale, est agencée devant dans l'espace intérieur (8), dans lequel la hauteur maximum de chacun de ses n-1 châssis de transport (4a, 4b, 4c) avec la carrosserie (6a, 6b, 6c) agencée dessus est réglée par prolongement de l'au moins un dispositif de soutien (14a, 14b, 14c, 16a, 16b, 16c, 16d) sur la valeur, qui est supérieure à la hauteur de porte t, mais au maximum aussi grande que la hauteur de plafond d, dans lequel ensuite un nième châssis de transport (4d) avec une nième carrosserie (6d) agencée dessus est agencé dans l'espace intérieur (8), dans lequel la nième carrosserie (6d) avec sa zone d'extrémité, qui présente la plus petite hauteur verticale, est agencée devant dans l'espace intérieur (8).
